# EUROPÄISCHE PATENTANMELDUNG

(11) **EP 1 281 999 A2**
(43) Veröffentlichungstag der Anmeldung: **05.02.2003**
(21) Anmeldenummer: 02015839.0
(22) Anmeldetag: 16.07.2002
(51) Int. Cl.: G02F 1/03, G02F 1/05

(54) **Nichtlineare Steigerung der Photosensitivität bei photorefraktiven Materialien**

(30) Priorität: 01.08.2001 DE 10137550
(71) Anmelder: Deutsche Telekom AG, 53113 Bonn (DE)
(72) Erfinder: Buse, Karsten, Prof.Dr., 49124 Georgsmarienhütte (DE); Lünnemann, Marc, 49757 Werlte (DE)

(57) **Zusammenfassung**

Verfahren zum Beschreiben eines optischen Modulators mittels elektromagnetischer Schreibstrahlung, wobei der Modulator einen photorefraktiven Wandlerkörper aufweist, in dem die räumlich modulierte Schreibstrahlung Änderungen des Brechungsindex verursacht, wobei an den Wandlerkörper eine externe Spannung angelegt wird, deren Höhe innerhalb eines Spannungsbereiches gewählt wird, in dem der Aufbau der Brechungsindexänderungen durch eine Erhöhung der Ladungsträgerbeweglichkeit oder Ladungsträgerdichte beschleunigt wird.

## Beschreibung

Die vorliegende Erfindung betrifft ein Verfahren zum Beschreiben eines optischen Modulators mittels elektromagnetischer Schreibstrahlung, wobei der Modulator einen photorefraktiven Wandlerkörper aufweist, in dem die räumlich modulierte Schreibstrahlung Änderungen des Brechungsindex verursacht. Die Erfindung betrifft auch eine Vorrichtung zur Umsetzung des Verfahrens.

Der photorefraktive Effekt wurde bereits 1966 in Lithiumniobat (LiNbO₃) durch Ashkin und Mitarbeiter bei den Bell-Laboratorien entdeckt. Schon wenig später wurde der Effekt als nützlich zur Speicherung von Volumenphasenhologrammen erkannt. Die Ursache des photorefraktiven Effekts wird folgendermaßen erklärt: Die Kristalle werden mit einem Lichtmuster, z. B. dem Interferenzmuster zweier Laserstrahlen, beleuchtet. Dabei werden Ladungen in den hellen Bereichen von Störstellen in das Leitungs- oder Valenzband angeregt, umverteilt und bevorzugt in den dunkleren Bereichen wieder eingefangen. Raumladungsmuster bauen sich auf und modulieren über den elektrooptischen Effekt den Brechungsindex. Quellen und Fänger für die Ladungen sind in der Regel Übergangsmetallionen, die in mehreren Valenzzuständen vorkommen. Als Antriebsmechanismen für den Ladungstransport sind die Diffusion, der volumenphotovoltaische Effekt sowie die Drift in externen Feldern, in Raumladungsfeldern und in pyroelektrischen Feldern bekannt.

Die Brechungsindexänderungen lassen sich beispielsweise über Lichtbeugung nachweisen. Dazu werden ebene Wellen zur Interferenz gebracht und sinusförmige Phasengitter geschrieben, an denen Licht eines Lesestrahls gebeugt wird. Die Beugungseffizienz, also das Verhältnis der Intensität des abgebeugten Lichts zu der des einfallenden Lichts, wächst für nicht zu starke Gitter quadratisch mit der Amplitude der Brechungsindexmodulation. In photorefraktiven Kristallen steigt die Beugungseffizienz am Anfang des Schreibprozesses quadratisch mit der Zeit und der Lichtintensität an. Außerdem wächst die Beugungseffizienz quadratisch mit der Probendicke. Als Sensitivität ("sensitivity", "Empfindlichkeit", "Photosensitivität") wird ein auf Zeit, Lichtintensität und Probendicke normierter Parameter eingeführt. Für praktische Anwendungen sind große Werte für die Sensitivität wünschenswert, um große Beugungswirkungsgrade mit wenig Licht, in kurzer Zeit und in relativ dünnen Proben zu erzielen.

Für die Sensitivität photorefraktiver Materialien sind zwei Parameter entscheidend: Der Sättigungswert der Brechungsindexänderung und die Zeitkonstante, mit der dieser Sättigungswert erreicht wird. Diese Zeitkonstante τ ist in der Regel durch die Beziehung τ = εε₀/σ gegeben, wobei ε die Dielektrizitätskonstante, ε₀ die Dielektrizitätskonstante des Vakuums und σ die elektrische Leitfähigkeit des Materials bezeichnen. Die elektrische Leitfähigkeit ist ihrerseits durch den Zusammenhang σ = eµN gegeben, wobei e die Elementarladung, µ die Ladungsträgerbeweglichkeit und N die Dichte der frei beweglichen Ladungsträger sind. Für eine große Sensitivität kommt es nun darauf an, daß die Zeitkonstante τ klein ist. Für eine kleine Zeitkonstante ist eine große Leitfähigkeit nötig, was durch eine große Empfindlichkeit und durch eine große Dichte beweglicher Ladungsträger erzielt werden kann. Aus dem Stand der Technik ist es bekannt, diese Parameter unter anderem durch Wahl eines geeigneten Wirtskristalls und geeigneter Dotierungen zu optimieren."

Neben den bekannten Anwendungen photorefraktiver Kristalle auf dem Gebiet der Photodetektoren, die Licht in ein elektrisches Signal umwandeln, werden viele andere Anwendungen photorefraktiver Kristalle im Bereich optischer Modulatoren untersucht. Derzeit gibt es jedoch erst wenige kommerzielle Produkte. So werden Bragg-Wellenlängenfilter für die optische Nachrichtentechnik und die Astronomie hergestellt. Außerdem werden photorefraktive Gitter zur Realisierung integriert optischer DBR-LiNbO₃-Laser eingesetzt. Als besonders vielversprechendes Anwendungsgebiet gilt vor allem die volumenholographische Datenspeicherung und die optische Phasenkonjugation.

Ein bislang ungelöstes Problem liegt jedoch in der unzureichenden Sensitivität. Zwei Gründe tragen dazu bei, daß die Sensitivität photorefraktiver Kristalle so gering ist. Zum einen löst nur ein Teil der absorbierten Photonen Ladungsträger von den Störstellen ab, während der überwiegende Teil des Lichts zu kurzzeitigen Anregungen führt, dann aber durch unmittelbare strahlungslose Rekombination in Phononen umgesetzt wird. Zum anderen ist die Transportlänge der Ladungen klein und beträgt beispielsweise für LiNbO₃ nur wenige Nanometer. Um Ladungen von hellen in dunkle Bereiche zu transportieren sind daher viele Anregungen nötig, wobei typische Distanzen bei Interferenzmustern in der Größenordnung von Mikrometern liegen. Zwar ist es bekannt, mit dem Anlegen elektrischer Felder die Photosensitivität zu steigern. Dieses ist darauf zurückzuführen, daß die Sättigungsbrechungsindexänderungen durch externe elektrische Felder vergrößert werden können. Außer bei großen Driftlängen und bei einer Raumladungsbegrenzung hängt die Zeitkonstante τ jedoch kaum vom Anlegen eines externen elektrischen Feldes ab, so daß die durch das Feld normalerweise hervorgerufene Erhöhung der Sensitivität nicht für den praktischen Einsatz auf den genannten Gebieten ausreicht.

Aus US 5,521,743 ist eine Photodiode bekannt, bei der eine homogene Schreibstrahlung vermittels des Avalanche-Effekts, der eine nichtlineare Steigerung der Sensitivität bewirkt, Brechungsindexänderungen hervorruft. Diese werden verursacht von thermooptischen Effekten oder vom Aufbau elektrischer Raumladungsfelder zusammen mit dem elektrooptischen Effekt. Die Änderungen werden nicht wie bei den bekannten Photodetektoren elektrisch sondern optisch mit einem zweiten Lichtstrahl nachgewiesen.

Aufgabe der Erfindung ist es nunmehr, ein Verfahren zum Beschreiben eines optischen Modulators mittels räumlich modulierter Schreibstrahlung zu schaffen, das sich mit geringem Aufwand umsetzen läßt und mit dem eine hohe Sensitivität erreicht wird. Zudem ist es Aufgabe der Erfindung, eine Vorrichtung, also einen optischen Modulator, zur Umsetzung des Verfahrens zu schaffen.

Diese Aufgaben werden durch ein Verfahren mit den Merkmalen des Anspruch 1 und eine Vorrichtung nach Anspruch 14 gelöst.

Ein wesentlicher Kerngedanke der Erfindung liegt darin, die Sensitivität des mit einem Lichtmuster, beispielsweise der Abbildung einer Maske oder eines Interferenzmusters, beleuchteten optischen Modulators durch Anlegen eines elektrischen Feldes mit großer Feldstärke zu erhöhen. Die Erfindung beruht also grundsätzlich darauf, die zum Aufbau der Raumladungsfelder in photorefraktiven Materialien notwendige Energie nicht - wie üblich - ausschließlich dem Licht zu entnehmen, sondern dafür die elektrische Energie aus einer externen Spannungs- und Stromquelle zu verwenden. Dabei wird die elektrische Feldstärke in einem Bereich gewählt, in dem ein Anstieg der Spannung eine Verkürzung der Aufbauzeit der Brechungsindexänderungen und damit eine Verkleinerung der Zeitkonstanten τ zur Folge hat. Vorteilhafterweise liegt die Feldstärke ein wenig unter der Durchschlagfeldstärke. So wird auf die erfindungsgemäße Weise elektrische Energie effizient anstelle der Lichtenergie zum Aufbau der benötigten elektrischen Raumladungsfelder eingesetzt. Die Verringerung der Zeitkonstanten τ ist durch verschiedene Faktoren bedingt:

Zunächst ist die Verringerung der Zeitkonstanten τ auf eine Erhöhung der Ladungsträgerbeweglichkeit µ bei großen Feldern zurückzuführen. Dadurch vergrößert sich die Photosensitivität, und räumlich modulierte Schreibstrahlung kann effizienter in Brechungsindexänderungen umgesetzt werden. Dabei bedeutet der Terminus "räumlich moduliert", daß die Modulation auch in einer zweidimensionalen Fläche senkrecht zur Strahlausbreitungsrichtung stattfinden kann.

Weiterhin kann es bei hohen elektrischen Feldern dazu kommen, daß die freien Ladungsträger so stark beschleunigt werden, daß sie sekundäre Ladungsträger durch Stoßionisation generieren ("Avalanche-Effekt", "Photo-Lawinen-Effekt"). Dadurch wächst die Ladungsträgerdichte N an, die Leitfähigkeit σ wird größer, die Zeitkonstante τ nimmt ab, und die Photosensitivität wächst.

Die Spannung kann sogar in einer vorteilhaften Ausführungsform der Erfindung so weit erhöht werden, daß bei einer Beleuchtung elektrische Durchschläge induziert werden. Die Feldstärke, ab der elektrische Durchschläge auftreten, kann durch die Beleuchtung verändert werden. Dadurch kann es z. B. in hellen Bereichen gezielt zu Durchschlägen kommen, in dunklen Bereichen können die Durchschläge vermieden werden - oder umgekehrt. Bei einer sorgfältigen Einstellung der Größe des angelegten elektrischen Feldes kommt es aufgrund dieses Effekts zu einem Abfall der Zeitkonstanten τ und somit zu einem Anstieg der Photosensitivität.

Weiterhin ist es möglich, die durch Licht erzeugten Raumladungsmuster durch ein nachträglich angelegtes externes elektrisches Feld zu verstärken. Ist ein Raumladungsfeld bereits geschrieben und wird ein homogenes äußeres elektrisches Feld zusätzlich angelegt, so kommt es zuerst dort zu elektrischen Durchschlägen und großen Strömen, wo beide Felder sich addierend überlagern und somit dieselbe Polarität aufweisen. Auf diese Art können durch das nachträgliche Anlegen eines elektrisches Feldes die Raumladungsmuster und somit die Brechungsindexänderungen wesentlich verstärkt werden. Dieses führt ebenfalls zu einem nichtlinearen Anstieg der Photoempfindlichkeit. Die Zeitkonstante des Aufbaus der Brechungsindexmuster nach dem Schreiben ist unendlich, da kein Wachstum des Effekts stattfindet und kann somit durch externe Felder stark verringert werden, wenn es zu dem beschriebenen Effekt kommt.

Die Verwendung inhomogener Lichtmuster ist für zahlreiche Anwendungen von besonderer Bedeutung: So erzeugt die Belichtung einer Maske mit einem homogenen Lichtmuster und die Abbildung der Maske auf den Wandler ("Pumpwelle") räumlich modulierte Brechungsindexänderungen. Die Belichtung des Modulators mit einem Laserstrahl anderer Wellenlänge ("Testwelle") führt dann dazu, daß dieser Lichtstrahl räumlich moduliert wird. Neben einer Intensitätsmodulation kann dabei die Phase oder die Polarisation der Testwelle betroffen sein. Mit einem Interferometer oder mit einem Polarisator lassen sich auch solche räumliche Modulationen einer Testwelle in eine Intensitätsmodulation der Testwelle konvertieren. Der beschriebene Wandler kann dazu dienen, Bilder, die als inkohärentes Licht vorliegen, in kohärente Bilder zu verwandeln. Dabei erlauben kohärente Bilder weit mehr Verfahren der optischen Bildverarbeitung als es bei inkohärenten der Fall ist. Eine andere Anwendung ist die Wellenlängenkonversion: Ein Lichtsignal, daß bei einer Wellenlänge vorliegt, wird in ein Signal bei einer anderen Lichtwellenlänge konvertiert. Bei dem "Pumplicht" kann es sich z. B. um Röntgenstrahlung, bei dem "Testlicht" um sichtbares Licht handeln.

In einer anderen Ausführungsform führt die Interferenz von zwei ebenen Wellen zu einem Lichtgitter mit kosinusförmiger Lichtverteilung. Das daraus resultierende Brechungsindexmuster kann zur Beugung eines der beiden Lichtstrahlen eingesetzt werden. Zudem kann Licht anderer Wellenlänge gebeugt werden, wenn die Bragg-Bedingung erfüllt ist. Gitter, die mit sichtbarem Licht in Transmission geschrieben werden, wirken für infrarotes Licht in Reflexionsgeometrie wie ein Spiegel, der allerdings nur Licht ganz bestimmter Wellenlänge reflektiert. Komponenten dieser Art sind von großer Bedeutung für die Telekommunikation, insbesondere für das "Wellenlängenmultiplexing" zur Erhöhung der Übertragungskapazität von Glasfasern.

Eine weitere Anwendung betrifft den "optischen Transistor". Aufgrund des Transports der Ladungen kann es zu einer räumlichen Verschiebung des erzeugten Brechungsindexmusters in Bezug auf das Lichtmuster kommen. Wird der Wandler abermals mit zwei ebenen Wellen beleuchtet, so kommt es zu einem Interferenzeffekt hinter dem Wandler. In jeder der beiden Richtungen befinden sich hinter der Probe zwei Lichtstrahlen: Der transmittierte Anteil des einen und der abgebeugte Anteil des jeweils anderen Lichtstrahls. Durch die Interferenz dieser Lichtstrahlen kommt es zur Verstärkung des einen Lichtstrahls auf Kosten der Intensität des anderen Lichtstrahls. Dieser als "Strahlkopplung" bezeichnete Effekt erlaubt die Verstärkung von zeitlich veränderlichen schwachen Signalen. Wird bei dieser Anwendung eine der ebenen Lichtwellen durch eine Lichtwelle mit Intensitätsmodulation (Bildinformation) ersetzt, so wird das ganze Bild verstärkt.

Eine weitere Anwendung liegt im Gebiet der Holographie. Das aufgezeichnete Interferenzmuster zweier Lichtstrahlen wird auch als "Hologramm" bezeichnet. In der Regel trägt die sogenannte "Objektwelle" oder "Signalwelle" Information. Eine zweite Welle, die "Referenzwelle", ist häufig als Kugelwelle oder ebene Welle ausgebildet. Die spätere Beleuchtung des Hologramms mit der Referenzwelle erzeugt durch Beugung die ursprüngliche Signalwelle. Dabei muß allerdings die ungeänderte Referenzwelle mit gleicher Wellenlänge und gleicher Einfallsrichtung eingesetzt werden. Anderenfalls tritt die Beugung nur schwach oder bei sogenannten "dicken" Hologrammen gar nicht auf. Die Ursache ist, daß Beugung die Einhaltung der Bragg-Bedingung erfordert. Sollen mehrere Hologramme in dem Wandler aufgenommen werden, so wird dazu einfach von Aufnahme zu Aufnahme die Referenzwelle etwas geändert. Z. B. reicht eine Variation des Einfallswinkels aus, um viele Hologramme in einem Volumen zu überlagern. Diese können dann nacheinander ausgelesen werden. Auf diese Art lassen sich Datenspeicher hoher Speicherkapazität und großer Leseraten verwirklichen.

Anstelle der beschriebenen Rekonstruktion von Daten können auch Vergleiche von Daten vorgenommen werden. Bei einem sogenannten Korrelator wird das gespeicherte Hologramm nicht mit dem Referenz- sondern mit dem Signallicht beleuchtet. Stimmt das Signal mit den gespeicherten Daten überein, so wird die Referenzwelle rekonstruiert. Anhand der Intensität dieser Welle läßt sich dann der Grad an Übereinstimmung feststellen, also die Korrelation zwischen gespeichertem und aktuellem Bild. Dieses Konzept wird z. B. zur Erkennung von Bildern und Mustern eingesetzt. Der Wandlerkörper kann somit zur Aufzeichnung eines Hologramms mit einem Brechungsindexänderungen hervorrufenden Interferenzmuster beaufschlagt werden, wobei die Brechungsindexänderungen durch das Anlegen eines großen äußeren elektrischen Feldes nichtlinear verstärkt werden.

Die Erfindung kann auch zur Umsetzung eines Bilds von einer Lichtwelle auf eine andere Lichtwelle genutzt werden, wobei ein Wandlerkörper eingesetzt wird, dessen optische Eigenschaften durch die Belichtung mit der einen Welle geändert werden. Diese Änderungen werden durch das Anlegen eines großen äußeren elektrischen Feldes verstärkt und mit der zweiten Welle nachgewiesen.

Alle exemplarisch beschriebenen Anwendungen basieren darauf, daß der Wandler mit einem Lichtmuster beleuchtet wird. Allen Anwendungen ist gemeinsam, daß durch das Anlegen großer elektrischer Felder die Zeitkonstante des Aufbaus der Brechungsindexänderungen gesenkt und damit die Photosensitivität gesteigert wird.

Die Erfindung wird nachfolgend anhand der in den Figuren dargestellten Ausführungsbeispiele näher beschrieben. Es zeigen:
- **Figur 1**: die Zunahme der Sensitivität in Abhängigkeit von der Spannung,
- **Figur 2**: die Beaufschlagung eines Wandlers mit einem Lichtmuster und
- **Figur 3**: ein Anwendungsbeispiel.

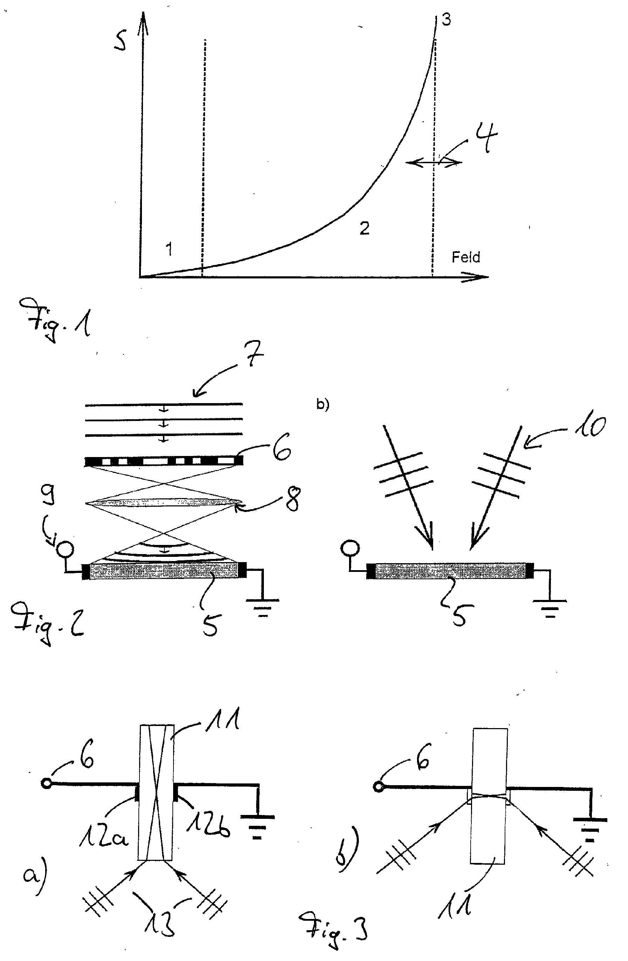

In Figur 1 ist in einem Diagramm ein Beispiel gezeigt, wie die Zunahme der Photosensitivität S in Abhängigkeit von der Stärke des an den Wandler angelegten elektrischen Feldes aussehen kann. Die Kennlinie beginnt mit einem linearen sog. "Ohmschen Bereich" 1. Hier steigt S noch linear mit der Feldstärke an, da S von den Sättigungsbrechungsindexänderungen beeinflußt wird. Werden jedoch derart große elektrische Felder angelegt, daß die Ladungsträgerbeweglichkeit oder die Dichte der freien Ladungsträger erheblich gesteigert werden, kommt es zu einem besonders starken (superlinearen) Anwachsen der Photoempfindlichkeit 2. Bei sehr hohen Feldstärken kommt es schließlich zu Durchschlägen 3. Die Durchschlagfeldstärke hängt von den Beleuchtungsbedingungen ab (Pfeil 4).

Wie oben beschrieben können bei räumlich modulierter Beleuchtung in den hellen oder dunklen Gebieten gezielt Durchschläge hervorgerufen werden. Die dadurch fließenden sehr großen Ströme führen zu einem schnellen Aufbau der Raumladungsmuster und somit zu einem starken - in Bezug auf die Steigerung des äußeren elektrische Feldes - nichtlinearen Anstieg der Photosentivität S. Liegt schon, wie beschrieben, ein elektrisches Raumladungsfeld vor, so kann mit Hilfe eines zusätzlichen externen elektrischen Feldes gezielt in den Bereichen ein Durchschlag hervorgerufen werden, in denen beide Felder dieselbe Polarität aufweisen.

Die Figur 2 zeigt schematisch, wie ein Wandler 5 mit einer inhomogenen Lichtverteilungen beaufschlagt werden kann. Dabei bietet sich als eine Möglichkeit die Beleuchtung einer Maske 6 mit homogenem Licht 7 und die anschließende Abbildung der Maske 6 auf den Wandler 5 an (Abbildung a). In diesem Fall wird das Bild der Maske 6 vermittels einer Linse 8 auf den Wandler 5 projeziert. Am Wandler 5 liegt eine Spannung 9 an. Anstelle des einzelnen Lichtstrahls 7 mit einer wohldefinierten Richtung können Lichtstrahlen aus unterschiedlichen Richtungen gleichzeitig auf den Wandler 5 treffen.

Alternativ können im Bereich des Wandlers 5 zwei oder mehr kohärente Wellen 10 überlagert werden. Aufgrund der Interferenz kommt es zur Ausbildung eines Intensitätsmusters (Abbildung b).

Figur 3 zeigt ein Ausführungsbeispiel zur praktischen Anwendung des Verfahrens. Auf ein photorefraktives Material 11, das z.B. ein photorefraktiver oxidischer Kristall, ein photorefraktiver Halbleiterkristall oder ein photorefraktives Polymer sein kann, werden Elektroden 12 aufgebracht. An die eine Elektrode 12a wird eine hohe Spannung 6 angelegt, die andere 12b wird auf Erdpotenzial gelegt. Dann wird die Probe 11 mit zwei interferierenden Lichtstrahlen 13 beleuchtet, die sich innerhalb der Probe 11 überlagern. Je nach dem durch welche Flächen die Lichtstrahlen 13 in das photorefraktive Material 11 eintreten, wird zwischen Transmissions- (Figur 3a) und Reflexionsgeometrie (Figur 3b) unterschieden. Das Interferenzmuster wird durch den photorefraktiven Effekt in ein Ladungs-, Feldund somit Brechungsindexmuster umgesetzt. Dabei führt einer oder führen mehrere der beschriebenen Effekte zu einer in Bezug auf das äußere elektrische Feld nichtlinearen Steigerung der Photosensitivität S.

Die in Abbildung 3 gezeigten Anordnungen können zur optischen Verstärkung schwacher Lichtstrahlen auf Kosten des zweiten Lichtstrahls dienen ("optischer Transistor", "Zwei-Strahl-Kopplung"), aber auch zur Verstärkung ganzer Bilder herangezogen werden. Weitere Anwendungen wären die holographische Speicherung von Bildern oder der Vergleich von zwei Bildern, wobei der in Figur 3 gezeigte Aufbau dann einen Teil eines optischen Korrelators darstellt.

## Patentansprüche

1. Verfahren zum Beschreiben eines optischen Modulators mittels elektromagnetischer Schreibstrahlung, wobei der Modulator einen photorefraktiven Wandlerkörper aufweist, in dem die räumlich modulierte Schreibstrahlung Änderungen des Brechungsindex verursacht,
**dadurch gekennzeichnet, daß** an den Wandlerkörper eine externe Spannung angelegt wird, deren Höhe innerhalb eines Spannungsbereiches gewählt wird, in dem der Aufbau der Brechungsindexänderungen durch eine Erhöhung der Ladungsträgerbeweglichkeit oder Ladungsträgerdichte beschleunigt wird.

2. Verfahren nach Anspruch 1,
**dadurch gekennzeichnet, daß** der Wandlerkörper mit Schreibstrahlung inhomogener Intensität beschrieben wird, die ein flächiges oder räumliches Lichtmuster innerhalb des Wandlerkörpers ausbildet, wobei das Lichtmuster ein Brechungsindexmuster erzeugt.

3. Verfahren nach Anspruch 1 oder 2,
**dadurch gekennzeichnet, daß** an den Wandlerkörper eine Spannung angelegt wird, deren Höhe dicht unterhalb der Durchschlagspannung des Wandlerkörpers liegt.

4. Verfahren nach Anspruch 3,
**dadurch gekennzeichnet**, daßzurErzeugungder Spannung Feldstärken von mehr als 1 kV / cm, insbesondere bis zu 500 kV / cm, angelegt werden.

5. Verfahren nach einem der vorherigen Ansprüche,
**dadurch gekennzeichnet, daß** die Inhomogenität der Schreibstrahlung durch eine Maske erzeugt wird, die in den Strahlengang zwischen einer die Schreibstrahlung emittierenden Strahlenquelle und den Wandlerkörper eingebracht wird.

6. Verfahren nach Anspruch 5,
**dadurch gekennzeichnet, daß** die Maske die Inhomogenität durch Beugung, Brechung und/oder Reflexion der Schreibstrahlung erzeugt.

7. Verfahren nach einem der vorherigen Ansprüche,
**dadurch gekennzeichnet, daß** die Inhomogenität der Schreibstrahlung ein Hologramm in den Wandlerkörper schreibt, das durch Interferenz eines Schreibstrahles mit einem zweiten Strahl innerhalb des Wandlerkörpers erzeugt wird.

8. Verfahren nach Anspruch 7,
**dadurch gekennzeichnet, daß** der mit dem Hologramm beschriebene Wandlerkörper mit einem Lesestrahl beleuchtet wird, der durch das Muster insbesondere in seiner Phase, seiner Intensität und/oder seiner Polarisation räumlich moduliert wird.

9. Verfahren nach Anspruch 8,
**dadurch gekennzeichnet, daß** die räumliche Modulation des Lesestrahles insbesondere durch ein Interferometer oder einen Polarisator in eine Intensitätsmodulation konvertiert wird.

10. Verfahren nach Anspruch 7,
**dadurch gekennzeichnet, daß** das Hologramm mit einem Lesestrahl beleuchtet wird, der sich in seiner Wellenlänge von dem Schreibstrahl unterscheidet, wobei die Bragg-Bedingung erfüllt ist.

11. Verfahren nach einem der vorherigen Ansprüche,
**dadurch gekennzeichnet, daß** der Modulator mit zwei miteinander interferierenden Schreibstrahlen beleuchtet wird, die ein Lichtmuster und damit auch ein Brechungsmuster im Wandlerkörper erzeugen und dabei derart an dem Brechungsmuster gebeugt werden, daß einer der Schreibstrahlen auf Kosten des anderen Schreibstrahls verstärkt wird ("optischer Transistor").

12. Verfahren nach Anspruch 11,
**dadurch gekennzeichnet**, daßeinederLichtwelleneine Intensitätsmodulation aufweist und dadurch Bildinformation trägt.

13. Verfahren nach einem der vorherigen Ansprüche,
**dadurch gekennzeichnet, daß** der Modulator einen photorefraktiven oxidischen Kristall, einen photorefraktiven Halbleiterkristall oder einen photorefraktives Polymer aufweist.

14. Vorrichtung zur Durchführung des Verfahrens nach einem der vorherigen Ansprüche.
